Europäisches Patentamt

European Patent Office

Office européen des brevets

(11) Publication number: **0 260 662**
**A2**

## (12) EUROPEAN PATENT APPLICATION

(21) Application number: 87113488.8

(22) Date of filing: 15.09.87

(51) Int. Cl.4: **G05D 21/02** , G01N 27/00

(30) Priority: 17.09.86 US 908278

(43) Date of publication of application:
23.03.88 Bulletin 88/12

(84) Designated Contracting States:
BE CH DE FR GB IT LI NL SE

(71) Applicant: JOHNSON SERVICE COMPANY
5757 North Green Bay Avenue P.O. Box 591
Milwaukee, WI 53201(US)

(72) Inventor: Hayes, Thomas Edward
56727 County Road 27
Goshen Indiana 46526(US)

(74) Representative: Henkel, Feiler, Hänzel &
Partner
Möhlstrasse 37
D-8000 München 80(DE)

(54) Apparatus for preventing condensation.

(57) Apparatus for preventing condensation includes a sensor, the variable resistance of which is a function of the difference between the temperature of the sensor and a dew point temperature which is equal to or less than the temperature of the sensor. An exciting means is coupled to the sensor for providing an output signal representative of the sensor resistance while detecting means senses to the output signal to provide a control signal for energizing a heater when the temperature difference is no greater than a predetermined value. A method for preventing condensation is also disclosed.

FIG. 1

EP 0 260 662 A2

## APPARATUS FOR PREVENTING CONDENSATION

This invention relates to temperature and humidity-responsive control devices and more particularly, to an apparatus for preventing unwanted condensation of water upon the exterior surface of a case.

In a supermarket, freezer cases are used to store and display frozen foods. The freezer cases are typically from five to twenty feet in length and have a case interior temperature which is sufficiently low to maintain food in a solidly-frozen state; the outer shell of the case is maintained at a temperature of perhaps 10-15° F. below the ambient room temperature. If the relative humidity exceeds about 60%, an outer shell at a temperature about 15° F. below ambient will develop water condensation thereon and the moisture will drip to the floor, causing annoyance and, possibly, damage to the floor surface.

To guard against such an occurrence, most freezer cases have an electric resistance heating coil built in close proximity to the outer shell and this coil can be energized to warm the shell sufficiently to prevent condensation. These coils are often energized continuously or, less frequently, on a time-based or duty-cycle basis so that the amount of power consumed by the coil is unnecessarily large and energy is thereby wasted.

One solution to this problem involves the measurement of relative humidity and dry bulb temperature and a prediction of the dew point temperature. If the temperature of the case shell approaches to within 10° F. or less of the dew point, the coils are energized. This is an imprecise solution to the problem and the instrumentation required is unnecessarily expensive and sometimes inaccurate.

Another, generally related approach is shown in United States Letters Patent No. 2,435,895 which discloses apparatus for detecting dew point temperature. Since it uses a nonporous grid material, e.g., glass or mica, it must rely upon moisture condensation, rather than adsorption, for its operation. There is no teaching as to how the apparatus might be used to effect a control function at a temperature above the dew point.

Yet another, generally related apparatus is shown in United States Letters Patent No. 3,957,200 and uses a cellulose acetate butyrate element to control humidity at a comfort level, i.e., well above the dew point, rather than to effect a control function near the dew point.

## SUMMARY OF THE INVENTION

Apparatus for preventing condensation includes a sensor, the variable resistance of which is a function of the difference between the temperature of the sensor and a dew point temperature which is less or equal thereto. An exciting means is coupled to the sensor for providing an output signal representative of the sensor resistance while detecting means senses the output signal to provide a control signal for energizing a heater when the temperature difference is no greater than a predetermined value.

It is an object of the invention to provide an apparatus for preventing condensation.

Another object of the invention is to provide an apparatus for effecting a control function when the temperature of a sensor is slightly above the dew point. How these and other objects are accomplished will become apparent from the detailed description thereof taken in conjunction with the drawing.

## DESCRIPTION OF THE DRAWING

FIGURE 1 is a schematic diagram of the inventive apparatus;

FIGURE 2 is a side elevation view, partly in section, of a sensor and mounting assembly as may be used with the apparatus of FIGURE 1, and;

FIGURE 3 is a graphic depiction of the resistance versus temperature characteristic for the sensor shown in FIGURES 1 and 2.

## DESCRIPTION OF A PREFERRED EMBODIMENT

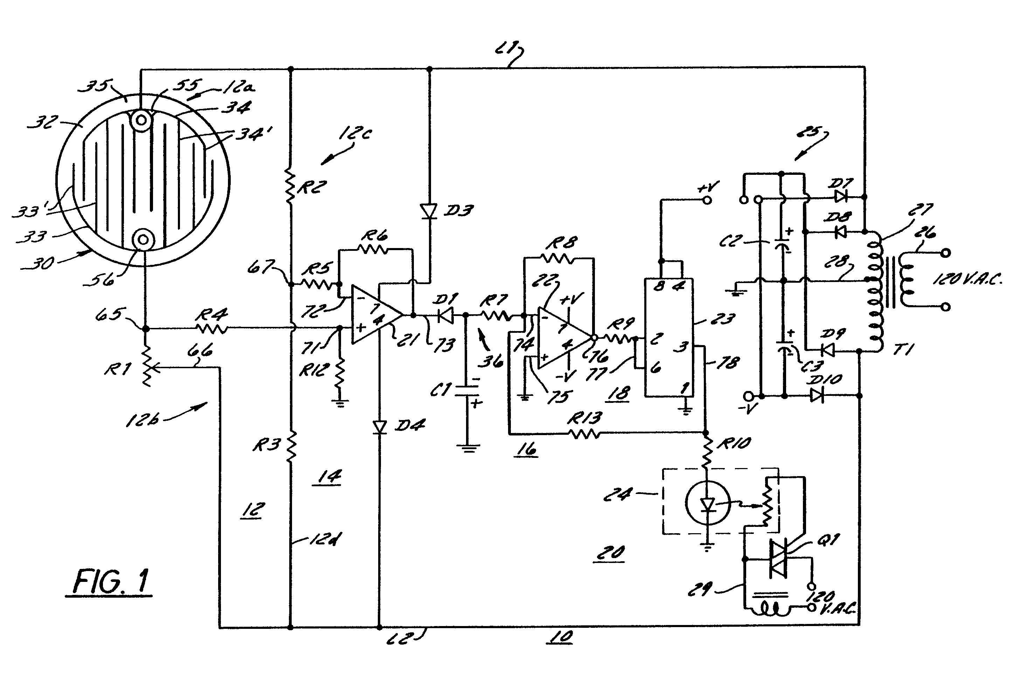

Referring to the drawings, FIG. 1 is a schematic diagram for the apparatus 10 which responds to changes in resistance of the surface electrical leakage path of a sensor 30 to enable the apparatus 10 to provide an output signal as a function of the proximity of the sensor temperature to the dew point. The sensor 30, which exhibits a sharply varying resistance in the region slightly above dew point, is connected in a bridge circuit 12. The sensor 30 exhibits a resistance varying by the difference between its surface temperature and the slightly lower dew point, causing an unbalanced condition for the bridge circuit 12 which provides an output indicative of the variation in sensor resistance.

The output of the bridge circuit 12 is monitored by a differential detector 14 which responds to an unbalanced condition of the bridge circuit 12. The differential detector 14 responds only to a decrease of the sensor resistance below a preset value of the resistor R1 used to establish a set point condition for operation. The output of the differential detector 14 is applied to a threshold detecting circuit 18 over an isolation amplifier 16. The threshold detecting circuit 18 is actuated whenever the output signal provided by amplifier 16 falls below the threshold signal level of the circuit 18. This energizes the output drive circuit 20 which energizes a heater for increasing the temperature of the case exterior.

The illustrated embodiment of the apparatus 10 depicts one of several possible circuits to monitor a bridge circuit 12 and command a threshold device such as detecting circuit 18. The diodes D1, D3, D4 in the illustrated circuit ensure that the apparatus 10 responds to a bridge unbalance in only one direction, i.e., to decreases in the resistance of the surface electrical leakage path. Any amplifier able to operate from a bridge impedance level in excess of one megohm and respond to only one direction of bridge unbalance would be satisfactory to operate a threshold device to result in a functional apparatus 10.

Considering the apparatus 10 in more detail, with reference to FIG. 1, the sensor 30 includes a disc 32 of fused alumina, preferably alumina #614 with a purity of at least 90%. A pair of gold grids 33 and 34 are fused onto the upper surface 35 of the disc 32, each grid, e.g., grid 33, having a plurality of elongated segments 33' extending in a generally parallel and spaced relationship. The grid 34 has a plurality of elongated segments 34' extending in a generally parallel and spaced relationship and located to be in interdigital relationship with the segments 33' . The disc 32, grids 33, 34 and segments 33' , 34' are of a known type of construction.

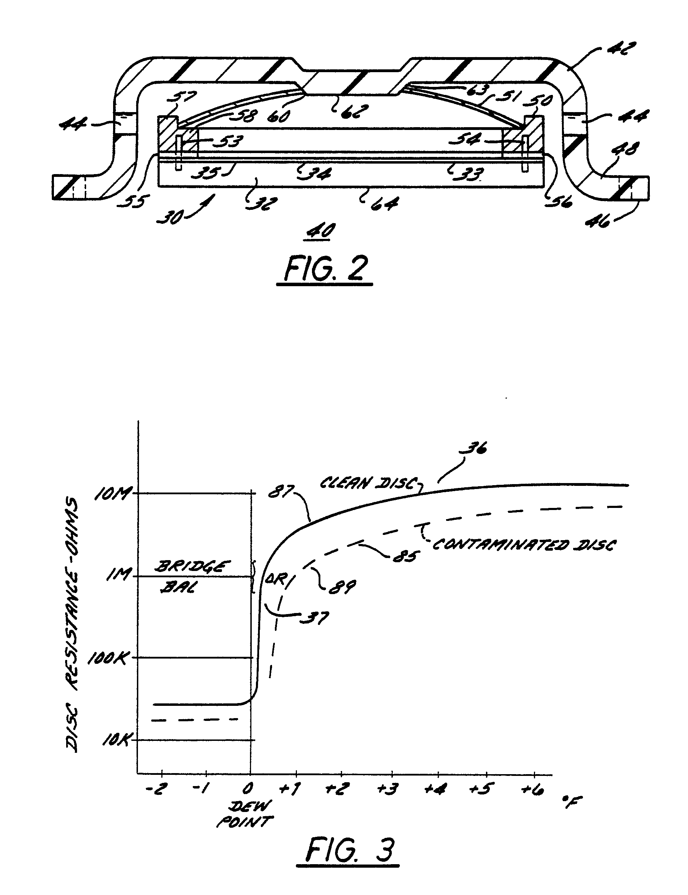

Referring particularly to FIG. 3, the sensor 30 relies for its function upon surface adsorption and electrical leakage phenomena. That is, at temperatures of the sensor surface which are well above dew point, relatively little moisture is adsorbed into the surface and the leakage resistance measured between the grids 33, 34 will be relatively high, on the order of several megohms in the exemplary embodiment and as shown at that portion of the curve identified by numeral 36. As the temperature of the surface 35 and the dew point temperature approach one another, progressively increasing amounts of moisture are adsorbed into the alumina so as to cause a decline in this leakage resistance. When the temperature of the surface 35 and the dew point closely approach as, for example, when the surface temperature is within about 0.5°- 0.8° F. of dew point, the increasing amount of adsorbed moisture results in a sharp decline in leakage resistance to a value of about 1 megohm or less, as illustrated at that portion of the curve identified by numeral 37. It is important to appreciate that this sharp decline in leakage resistance occurs prior to the condensation of visible moisture upon the surface.

For the purpose of mounting the sensor 30 in close contact with a surface, the temperature of which is to be sensed, there is provided a mounting assembly 40, shown in FIG. 2. The mounting assembly 40 also protects the sensor disc 32 from external damage while permitting ambient air to flow across its surface 35. The mounting assembly 40 includes a cup shaped housing 42 which has openings 44 to permit ambient air to circulate therethrough. The lower surface 46 of the housing 42 terminates in an annular flange 48 which includes apertures to receive mounting bolts (not shown) for securing the housing 42 to the surface of the freezer case.

A locater ring 50 and a spring washer 51 are positioned within the housing 42 to locate the disc 32 and bias it into contact with the surface of the freezer case (not shown). The locator ring 50 is preferably comprised of a molded plastic ring having a pair of guide pins 53 and 54 projecting downwardly from the bottom of the disc 50. The guide pins 53 and 54 locate electric contacts 55 and 56 disposed in electrically conductive relationship to the conductor grids 33 and 34, respectively, which are disposed on the upper surface 35 of the disc 32. The contacts 55 and 56 facilitate connection of the sensor 30 to the bridge circuit 12. The upper surface 57 of the ring 50 is countersunk defining a shoulder 58 which is engaged by the peripheral edge of the conical shaped spring washer 51. The washer 51 has a central aperture 60 through which extends a boss 62 formed on the underside 63 of the protective cover 42. When assembled, the spring washer 51 is flexed, applying a force to the locator ring 50 for maintaining the electrical contacts 55 and 56 in contact with the conductor grids 33 and 34 on the disc 32. In addition, the spring washer 51 provides sufficient force to urge the bottom surface 64 of the sensor disc 32 into contact with the surface being sensed. It is to be appreciated that the housing 42 is preferably formed to a depth such that when the spring is at its free height, unflexed, the surface protrudes slightly below the lower surface of the housing. When constructed in that manner and when installed, electrical contact with the grids 33, 34 will be maintained and the surface 35 of the sensor 30 will be maintained in a temperature sensing relationship to the case.

Referring to FIG. 1, the apparatus 10 includes a power supply 25 having a transformer T1 with its primary winding 26 connected to a 120 VAC 60 Hz source, and a center-tapped secondary winding 27 connected between conductors L1 and L2 to provide 12 VAC therebetween for energizing the bridge circuit 12, and the amplifier 21 of the differential detector 14. The center tap 28 of the secondary winding 27 is connected to ground. The power supply 25 also includes a full wave rectifier bridge circuit comprises of four diodes D7-D10, and filter capacitors C2 and C3 which provide DC outputs +V and -V, referenced to ground, for powering the isolation amplifier 16 and the threshold detecting circuit 18.

The sensor 30 is connected in one leg 12a of the bridge cirucit 12, with terminal 55 being connected to conductor L1 and terminal 56 being connected to an output terminal 65 of the bridge circuit 12. The variable resistor R1, which forms a second leg 12b of the bridge circuit 12, has one side of its resistance portion connected to terminal 65 and its wiper 66 connected to conductor L2. Resistors R2 and R3, which form the other legs 12c and 12d of the bridge circuit 12 are connected in series between conductors L1 and L2. The use of AC excitation for the bridge circuit 12 results in a more stable resistance characteristic for the sensor 30 and also prevents electrolysis of contaminants and the plating out of foreign materials upon the gold ink which defines the electrodes 33 and 34.

The output lead 65 of the bridge circuit 12 is connected through a resistor R4 to the non-inverting input 71 of the amplifier 21 of the detector 14. The value of the resistor R12 is preferably selected such that R6/R5 = R12/R4. The lead 67 of the bridge circuit 12 is connected through a resistor R5 to the inverting input 72 of amplifier 21.

In the exemplary embodiment of the apparatus 10, the variable resistor R1 is set to provide a bridge output condition such that the input to integrated circuit 23 is just equal to the lower threshold level of the circuit 23 when the temperature of the sensor 30 is about 0.5° F. above the dew point.

When the bridge circuit 12 is balanced, signals directly varying in amplitude and polarity with the AC signal on conductors L1 and L2 are applied to inputs 71 and 72 of the amplifier 21. An increase or decrease in sensor resistance causes a variation in the amplitude of the sensor signal extended to input 71 of the amplifier 21 relative to the reference signal provided to amplifier input 72. For example, an increase in sensor resistance causes a decrease in the amplitude of the sensor signal for positive half cycles of the AC signal, when conductor L1 is positive relative to conductor L2, and an increase in the amplitude of the sensor signal for negative half cycles of the AC signal. Conversely, a decrease in sensor resistance causes an increase in the amplitude of the sensor signal for positive half cycles of the AC signal and a decrease in the sensor signal for negative half cycles of the AC signal.

The amplifier 21 is connected for operation as a differential amplifier, and the output of the amplifier is zero whenever signals of equivalent magnitude are applied at leads 65, 67. A feedback resistor R6 is connected at node 73 between the output of the amplifier 21 and the inverting input 72.

The amplifier 21 is energized by half wave AC power through diodes D3 and D4, which permit the amplifier 21 to be operable only during positive half cycles of the AC signals provided on conductors L1 and L2. Diode D3 is connected between conductor L1 and one power input of the amplifier 21 at pin 7 while diode D4 is connected between a second power input at pin 4 of the amplifier 21 and conductor L2. Diodes D3 and D4 are forward biased during positive half cycles of the AC signals on conductors L1 and L2 and are reverse biased during negative half cycles. Accordingly, during positive half cycles of the AC signals, the amplifier 21 amplifies the difference between the sensor signal and the reference signal to provide negative output signals at a 60Hz rate in response to an increase in sensor resistance and positive output signals at a 60Hz rate in response to a decrease in sensor resistance.

The output node 73 of amplifier 21 is coupled to the input of the amplifier 16 over the filter network 36, which includes diode D1, a capacitor C1 and a resistor R7. The amplifier 16 includes an operational amplifier 22 which is connected for operation in the inverting mode. Diode D1 and resistor R7 are connected in series between the node 73 of the amplifier 21 and the inverting input 74 of amplifier 22, capacitor C1 is connected between the junction of diode D1 and resistor R7 and ground and the non-inverting input 75 of amplifier 22 is connected to ground. A feedback resistor R8 is connected between the output 76 of amplifier 22 and the inverting input 74. The amplifier 22 also has power inputs at pins 7 and 4 connected to +V and -V, respectively. The amplifiers 21, 22 may, for example, be of the commercially available Type 741.

The diode D1 passes only negative polarity signals to amplifier 22, such that the apparatus 10 responds only to decreases in sensor resistance below the value of approximately one megohm which establishes the balance condition for the bridge circuit 12. The resistor R7 and capacitor C1 filter the half wave AC output signal provided by amplifier 21 to result in a filtered DC signal to the amplifier 22. Amplifier 22 amplifies the signal and provides an output of positive polarity, the amplitude of which is related to the sensor resistance.

The output signal from amplifier 22 is applied to a trigger input 77 of the threshold detecting circuit 18 which may be embodied as a commercially available Type NE 555 circuit 23. The circuit 23 has turnon and turnoff trigger inputs, at respective pins 2 and 6 commonly connected to trigger input 77 and over a resistor R9 to the output 76 of amplifier 22. The circuit 23 has power inputs at pins 8 and 4 connected to +V and an input at terminal 1 connected to ground. Circuit 23 is of the triggered threshold type, the output of which at lead 78 is either at approximately +V or approximately ground potential, depending upon whether the voltage at input 77 is bleow one-third the supply voltage +V or above two-thirds of the supply voltage, respectively.

The circuit 23 is an inverter and responds to a positive polarity, negative going signal supplied to the trigger input 77 as the result of a decrease in sensor resistance to a predetermined value and is actuated whenever the trigger signal reaches the lower threshold voltage for the circuit 23 to provide a positive output signal at level +V over the output 78 thereof. The circuit 23 is disabled when the trigger signal increases to a value which exceeds the turnoff threshold voltage for the circuit 23. In the exemplary embodiment, the turnon threshold corresponds to a sensor resistance of approximately 0.80 megohms and the turnoff threshold corresponds to a sensor resistance of approximately 0.89 megohms. Thus, the sensor resistance must decrease to a value of approximately 0.8 megohms before the timing circuit 23 is enabled. Thereafter, the sensor resistance must increase to a value of about 0.89 megohms before the timing circuit 23 is disabled. The resistor R13 is used to provide a positive feedback signal between the output of circuit 23 and the input of amplifier 22, thereby resulting in circuit hysteresis or "latching" to prevent erratic operation due to electrical noise.

It is to be appreciated that there is some difference between the leakage resistances of a clean and a contaminated sensor disc 32 as indicated in FIG. 3 by the dotted line 85 which shows the characteristic sensor resistance for a disc 32 which has been contaminated with a liquid such as salt water or beverage soft drink and later dried. The line 85 representing the leakage resistance of the contaminated disc 32 has generally the same shape as the line 87 representing the leakage resistance of a clean disc 32, but the sharp decrease in resistance as shown in the region 89 occurs at a sensor temperature approximately 1° F. higher in the instance of the contaminated disc. In either instance, the dry resistance of the sensor disc 32 is several megohms when the temperature of the freezer case and sensor are more than about 3-5° F. above dew point.

The output 78 of the timing circuit 23 is connected to the output control circuit 20, which includes a triac Q1, and a solid state opto-electronic switching device 24, such as a Clairex Type CLM 8200 Opto-Isolator. The switching device 24 is connected in series with a current limiting resistor R10 between the output node 78 of the circuit 23 and the gate circuit of the triac Q1. The triac Q1 has its control circuit connected in series with the contactor coil 29 of the freezer case heater and a 120 VAC power source.

Whenever the circuit 23 is actuated, the switching device 24 is energized to gate triac Q1 into conduction. When triac Q1 conducts, power is supplied to the contactor coil 29 for energizing the freezer case heater. When the freezer case shell has been heated sufficiently to dissipate adsorbed moisture and cause the sensor resistance to increase to about 0.89 megohms, the threshold detecting circuit 18 is disabled, deenergizing the switching device 24, disabling the triac Q1 and deenergizing the contactor coil 29 of the heater.

In operation, it is first assumed that the temperature of the freezer case and sensor 30 are sufficiently above the dew point so that the resistance of the sensor disc 32 is approximately one megohm and that the value of the resistor R1 has been adjusted to provide a signal level at the input of circuit 23 that is in excess of one-third +V. Accordingly, the threshold detecting circuit 18 and triac Q1 are disabled and the contactor coil 29 is deenergized.

It is next assumed that the temperatures of the freezer case and sensor 30 decrease, causing the signal level applied at amplifier input 71 to increase relative to the level of the reference signal applied at amplifier input 72. Accordingly, a more positive signal is provided at the output 73 of amplifier 21. The positive signal backward biases diode D1 and discharges capacitor C1, thereby decreasing the signal level at input 74 of the amplifier 22 and actuating amplifier 22 to provide an output signal of decreasing value at the trigger input 77 of circuit 23. Even though amplifier 21 is disabled during the next negative half cycle of the AC signal, capacitor C1 discharges through resistor R7 and the inputs 74 and 75 of amplifier 22 to maintain the output of amplifier 22 for the duration of the negative half cycle.

This cyclic activity repeats, with capacitor C1 slightly charging and discharging during each cycle of the AC signal as the operating temperature of the freezer case and sensor 30 approach the dew point. The resistance of the sensor 30 continues to decrease, causing a corresponding decrease in the amplitude of the positive-polarity trigger signal provided at output 76 of amplifier 22.

When the sensor resistance decreases to approximately 0.80 megohms, the trigger signal becomes of sufficiently low amplitude to actuate the threshold detecting circuit 18 which energizes the switching device 24 to gate the triac Q1 into conduction and energize the contactor coil 29. The heater is thereby energized and the shell of the freezer case is heated, increasing the temperature thereof relative to the dew point. As the shell temperature increases, the sensor resistance also increases, effecting an increase in the level of the trigger signal provided at output 76 of amplifier 22.

When the temperature of the freezer case increases sufficiently to cause the resistance of the sensor 30 to reach about 0.89 megohms, the threshold detecting circuit 18 is disabled to deenergize the switching device 24 and the triac Q1. The contacter coil 29 is thereby deenergized to disable the freezer case heater.

The following components have been found useful in constructing the apparatus 10 and resistance is in ohms and capacitance is in microfarads unless otherwise indicated.

FIGURE 1
_____

| R1 | 2M | R2, R3 | 8200 |
|---|---|---|---|
| R4, R5, R6 | 0.1M | C1 | 22/50V. |
| R7 | 10K | R8 | 47K |
| R9, R10 | 1K | D1-D4 | 1N4148 |
| R13 | 150K | D7-D10 | 1N4001 |

While only a single preferred embodiment of the apparatus 10 has been shown and described, it is not intended to be limited thereby but only by the scope of the claims which follow.

**Claims**

1. Apparatus for preventing condensation and including:
a sensor, the variable resistance of which is a function of the difference between the temperature of said sensor and a dew point temperature which is equal to or less than said temperature of said sensor;
means for exciting said sensor for providing an output signal representative of said sensor resistance;
means for detecting said output signal to provide a control signal for energizing a heat when said temperature difference is no greater than a predetermined value.

2. The invention set forth in claim 1 wherein said detecting means comprises a differential detector for comparing said output signal with a reference signal, said differential detector causing the energization of said heater when the value of said output signal exceeds that of said reference signal by a predetermined difference.

3. The invention set forth in claim 2 wherein said sensor is connected within one leg of a bridge circuit, a second leg of said bridge circuit including a variable resistor for selecting a bridge null point.

4. Apparatus for preventing condensation and including:
a sensor having a variable resistance which is a function of the difference between the sensor temperature and a lower dewpoint temperature;
a bridge circuit having a first leg coupled to said sensor, said bridge circuit further including a second leg having a variable resistor;
a differential detector circuit coupled to said bridge circuit for providing a detector signal of a first polarity when the resistive value of said sensor is less than a predetermined value;

an amplifier for receiving and amplifying said detector signal;

a second detector circuit for receiving said amplified signal and energizing a heater when the value of said amplifier signal is in excess of a predetermined value.

5. Apparatus for preventing the condensation of water and including:

a sensor formed of a moisture-adsorbing material and having disposed thereon a plurality of interdigitated grids, said grids being electrically isolated one from the other and having spacing therebetween to provide an electrical resistance, said spacing resulting in a first, higher electrical resistance between said grids when said material is essentially free of adsorbed water and a second, lower electrical resistance between said grids when moisture has been adsorbed by said material but prior to water condensation thereon;

an electrical bridge circuit coupled to said grids of said sensor and including a plurality of resistive legs, said sensor defining one of said legs, and;

an amplifier coupled to said bridge circuit, said amplifier being responsive to a resistive unbalance of said bridge circuit only upon a predetermined decrease in said electrical resistance of said sensor, said amplifier thereupon commanding a threshold device to initiate a heating cycle.

6. The invention set forth in Claim 5 wherein said first resistance is in excess of three megohms and said second resistance is less than two megohms.

7. A method for preventing the condensation of water upon a food storage case and including the steps of:

providing a sensor to be mounted upon said case to be essentially in temperature correspondence with a surface of said case, said sensor being formed of a moisture-adsorbing material and having a plurality of electrically isolated, interdigitated grids disposed thereon and having an electrical resistance therebetween, said grids exhibiting a first, higher electrical resistance therebetween when the temperature of said material exceeds the dewpoint by about 1° F. and a second, lower electrical resistance therebetween when said temperature of said material exceeds said dewpoint by less than about 0.9° F.;

providing a bridge circuit coupled to said grids of said sensor and including a plurality of resistive legs, said sensor defining one of said legs;

detecting an unbalance in said bridge circuit only upon a decrease of a predetermined minimum magnitude in the balance of said electrical resistance, and;

initiating a heating cycle upon the detection of said bridge circuit unbalance.

FIG. 1

FIG. 2

FIG. 3